# EUROPÄISCHE PATENTSCHRIFT

(11) **EP 2 956 335 B1**
(45) Veröffentlichungstag und Bekanntmachung des Hinweises auf die Patenterteilung: **21.12.2016**
(21) Anmeldenummer: 14711911.9
(22) Anmeldetag: 13.02.2014
(51) Int. Cl.: B60Q 1/068, F21S 8/10

(54) **LICHTMODUL FÜR EINEN FAHRZEUGSCHEINWERFER**
LIGHT MODULE FOR A VEHICLE HEADLAMP
MODULE LUMINEUX POUR UN PROJECTEUR DE VÉHICULE

(30) Priorität: 14.02.2013 AT 501082013; 10.02.2014 AT 500972014
(43) Veröffentlichungstag der Anmeldung: 23.12.2015
(73) Patentinhaber: ZKW Group GmbH, 3250 Wieselburg (AT)
(72) Erfinder: REITEGGER, Oliver, 8962 Gröbming (AT); MAIER, Udo, 3130 Herzogenburg (AT)
(74) Vertreter: Patentanwaltskanzlei Matschnig & Forsthuber OG
(86) Internationale Anmeldenummer: PCT/AT2014/050040
(87) Internationale Veröffentlichungsnummer: WO 2014/124477

(56) Entgegenhaltungen:
- EP-A1- 2 402 650
- EP-A2- 1 213 178
- AT-A4- 506 090
- DE-A1-102006 020 961
- GB-A- 202 779

## Beschreibung

Die Erfindung betrifft ein Lichtmodule für einen Scheinwerfer, insbesondere für einen Kraftfahrzeugscheinwerfer.

Weiters betrifft die Erfindung eine Beleuchtungsvorrichtung mit einem, vorzugsweise mehreren solchen Lichtmodulen.

Außerdem betrifft die Erfindung einen Fahrzeugscheinwerfer, insbesondere einen Kraftfahrzeugscheinverfer, mit zumindest einer solchen Beleuchtungsvorrichtung.

Oben genannte Beleuchtungsvorrichtung weisen beispielsweise zwei oder vorzugsweise mehrere Lichtmodule auf, wobei alle Lichtmodul gemeinsam eine Lichtverteilung bilden. Beispielsweise erzeugt jedes Lichtmodul ein oder mehrere vertikale, d.h. im Wesentlichen stehende Lichtsegmente, die Überlappung aller Lichtsegmente der Lichtmodule bildet dann eine bestimmte Lichtverteilung. Durch gezieltes Deaktivieren und/oder Aktivieren ein oder mehrerer Lichtsegmente können, unterschiedliche Lichtverteilungen, wie etwa blendfreies Fernlicht, Kurvenlicht, Schlechtwetterlicht, Autobahnlicht, Tagtahrlicht, etc. realisiert werden. US 2010/110660 A1 offenbart ein Lichtmodul nach dem Oberbegriff des Anspruchs 1.

Um optimale und insbesondere gesetzeskonforme Lichtverteilungen erzeugen zu können, ist es notwendig, dass die einzelnen Lichtmodule zueinander eingestellt werden. Dazu sind diese in der Regel um horizontale und vertikale Achsen verschwenkbar.

Konkret ist dabei in der Regel vorgesehen, dass die Lichtquellen eines Lichtmoduls, bei welchen Lichtquellen es sich üblicherweise um LED-Lichtquellen handelt, auf einem Träger, üblicherweise in Form eines Kühlkörpers, fix angeordnet sind. Das gesamte Lichtmoduls, das üblicherweise in der Regel noch eine Primäroptik (Vorsatzoptik für die Lichtquellen) und eine Sekundäroptik (Linse) aufweist, wird dann wie oben schon angesprochen mittels aufwändiger Verstellsysteme, Einstellschrauben, etc. verstellt und fixiert. Diese Vorgangsweise ist mechanisch aufwändig und teuer.

Es ist eine Aufgabe der Erfindung, eine vereinfachte Einstellung der Lichtverteilung eines Lichtmoduls, insbesondere der Lichtverteilungen von zwei oder mehreren Lichtmodule zueinander zu ermöglichen.

Diese Aufgabe wird mit einem eingangs erwähnten Lichtmodul gelöst, welches erfindungsgemäß umfasst:
- ) eine oder mehrere Lichtquellen, welche auf einem Lichtquellen-Träger angeordnet ist/sind,
- ) zumindest eine Vorsatzoptik, welche zumindest eine Vorsatzoptik mittels eines Vorsatzoptik-Trägers an dem Lichtquellen-Träger befestigbar ist, sodass Lichtquellen, Lichtquellen-Träger, zumindest eine Vorsatzoptik und Vorsatzoptik-Träger eine Lichtquellen-Baugruppe bilden,
- ) eine Sekundäroptik, welche in Lichtaustrittsrichtung nach der zumindest einen Vorsatzoptik angeordnet ist und mit einem Sekundäroptik-Träger gehalten ist,
- ) und wobei weiters ein Baugruppen-Träger vorgesehen ist, in Bezug auf welchen die Lichtquellen-Baugruppe befestigbar ist,
und wobei Klemmmittel vorgesehen sind, mittels welcher Klemmmittel die Lichtquellen-Baugruppe zwischen dem Sekundäroptik-Träger und dem Baugruppen-Träger lösbar einklemmbar ist, und wobei im gelösten Zustand der Klemmmittel die Lichtquellen-Baugruppe im Wesentlichen parallel zu dem Baugruppen-Träger verschiebbar ist,
und wobei die Klemmmittel zumindest eine Klemmschraube umfassen, mittels welcher der Baugruppen-Träger und der Sekundäroptik-Träger direkt miteinander verbindbar sind, so dass die zumindest eine Klemmschraube die Lichtquellen-Baugruppe nicht durchsetzt,
- ) und wobei Arretiermittel vorgesehen sind, mittels welcher Arretiermittel die Lichtquellen-Baugruppe in Bezug auf den Baugruppen-Träger fixierbar ist,
- ) und wobei die Arretiermittel die Lichtquellen-Baugruppe an dem Baugruppen-Träger und dem Sekundäroptik-Träger befestigen,
- ) und wobei die Arretiermittel zumindest eine Arretierschraube umfassen, welche Arretierschraube eine Rückseite des Baugruppen-Trägers durch eine zugeordnete Arretierschraubenöffnung in dem Baugruppen-Träger sowie eine Baugruppen-Öffnung der Lichtquellen-Baugruppe durchsetzt und in ein korrespondierendes Arretierschrauben-Gewinde in dem Sekundäroptik-Träger einschraubbar ist.

Bei der vorliegenden Erfindung sind die Lichtquellen eines Lichtmoduls nicht mehr "von Anfang an" fix auf dem Kühlkörper angebracht, sondern die die Lichtverteilung des Licht-moduls erzeugende Lichtquellen-Baugruppe ist in Bezug auf seinen Baugruppen-Träger, bei dem es sich vorzugsweise um einen Kühlkörper handelt, vorerst noch verschieblich gelagert. Durch Verschieben der Baugruppe kann die Lichtverteilung entsprechend ausgerichtet werden, in der korrekten, gewünschten Position schließlich kann die Lichtquellen-Baugruppe schließlich in Bezug auf den Baugruppen-Träger fixiert werden.

Mit der erfindungsgemäßen Ausgestaltung kann auf ein kompliziertes Verstellsystem verzichtet werden, denn es ist lediglich notwendig, die Klemmung, mittels welcher die Lichtquellen-Baugruppen von Sekundäroptik-Träger und Baugruppen-Träger klemmend gehalten wird, soweit zu lösen, dass die Lichtquellen-Baugruppe einfach, vorzugsweise mit einem geeigneten Werkzeug, verschoben werden kann.

Es ist vorgesehen, dass die Klemmittel zumindest eine Klemmschraube umfassen, mittels welcher der Baugruppen-Träger und der Sekundäroptik-Träger direkt miteinander verbindbar sind.

Der Begriff "direkt" bedeutet in diesem Zusammenhang, dass die zumindest eine Klemmschraube die Lichtquellen-Baugruppe nicht durchsetzt.

Besonders bevorzugt ist es, wenn die Klemmittel genau zwei Klemmschrauben umfassen. Mit zwei Klemmschrauben, welche in einem geeigneten Abstand zueinander positioniert sind, kann die Lichtquellen-Baugruppe möglichst gleichmaßig und zuverlässig verklemmt werden.

Die Verwendung von Klemmschrauben als Klemmittel hat den Vorteil, dass diese einerseits kostengünstig und in der Anwendung einfach zu handhaben sind, andererseits können mit diesen Klemmschrauben die beiden Träger abschließen zuverlässige stabil aneinander befestigt werden.

Bei einer konkreten Ausführungsform der Erfindung ist vorgesehen, dass der Sekundäroptik-Träger eine Führung für die Lichtquellen-Baugruppe bildet, in welcher diese Lichtquellen-Baugruppe verschieblich, insbesondere seitlich, d.h. bezogen auf die Einbaulage des Lichtmoduls horizontal verschieblich gelagert ist.

Zum Verschieben der Lichtquellen-Baugruppe werden die Klemmittel gelöst, aber nur soweit, das die beiden Träger zwar immer noch miteinander verbunden sind, sich aber die Lichtquellen-Baugruppe dazwischen verschieben lässt.

Durch die Ausgestaltung einer Führung, die prinzipiell auch an dem Baugruppen-Träger vorgesehen sein kann oder von dem Baugruppen- und dem Sekundäroptik-Träger gemeinsam ausgebildet ist, vorzugsweise aber von dem Sekundäroptik-Träger gebildet ist, wird eine geführte und/oder begrenzte Bewegung der Lichtquellen-Baugruppe ermöglicht, sodass die Einstellung wesentlich zielgerichteter erfolgen kann.

Außerdem ist vorgesehen, dass Arretiermittel vorgesehen sind, mittels welcher Arretiermittel die Lichtquellen-Baugruppe in Bezug auf den Baugruppen-Träger fixierbar ist.

Nach Einstellung der korrekten Position kann somit zusätzlich zu der Klemmung die Licht-quellen-Baugruppe mit den Arretiermitteln in Bezug auf den Baugruppen-Träger fixiert werden, sodass auch im Betrieb des Fahrzeuges die Lichtquellen-Baugruppe zuverlässig positioniert ist.

Konkret ist dabei vorgesehen, dass die Arretiermittel die Lichtquellen-Baugruppe an dem Baugruppen-Träger und/oder dem Sekundäroptik-Träger, vorzugsweise an beiden Trägern befestigen.

Es ist vorgesehen, dass die Arretiermittel zumindest eine Arretierschraube umfassen, welche Arretierschraube eine Rückseite des Baugruppen-Trägers durch eine zugeordnete Arretierschraubenöffnung in dem Baugruppen-Träger sowie eine Baugruppen-Öffnung durchsetzt und in ein korrespondierendes Arretierschrauben-Gewinde in dem Sekundäroptik-Träger einschraubbar ist.

Weiters ist mit Vorteil vorgesehen, dass die zumindest eine Baugruppen-Öffnung als Langloch ausgebildet ist, wobei in Einbaulage das Langloch sich vorzugsweise in horizontaler Richtung, im Wesentlichen normal zur Lichtaustrittsrichtung erstreckt.

Konkret sind umfassen die Arretiermittel genau zwei Arretierschrauben mit zugeordneten Öffnungen bzw. Gewinden.

Weiters ist mit Vorteil vorgesehen, dass die zumindest eine Baugruppen-Öffnung an dem Vorsatzoptik-Träger ausgebildet ist, welcher Vorsatzoptik-Träger in der Regel deutlich stabiler ist als der Lichtquellen-Träger.

Üblicherweise ist vorgesehen, dass der Vorsatzoptik-Träger an dem Lichtquellen-Träger lösbar befestigbar, beispielsweise verrastbar oder verklipsbar ist.

Lichtquellen-Träger und Vorsatzoptik-Träger werden zueinander zentriert und zu der Lichtquellen-Baugruppe vor-verrastet.

Für ein einfaches Einstellen der Lichtquellen-Baugruppe ist mit Vorteil vorgesehen, dass der Baugruppen-Träger eine Werkzeug-Öffnung zum Einsetzen eines Verschiebewerkzeuges, mittels welchem die Lichtquellen-Baugruppe verschiebbar ist, aufweist.

Außerdem ist vorgesehen, dass die Lichtquellen-Baugruppe eine Verstellöffnung aufweist, welche der Werkzeugöffnung gegenüberliegend angeordnet ist, wobei die Verstellöffnung vorzugsweise an dem Vorsatzoptik-Träger angeordnet ist, und in welche Verstellöffnung das Verschiebewerkzeug mit einem Werkzeugabschnitt eingreift.

Durch Bewegen des Werkzeuges in der Werkzeugöffnung verschiebt das Werkzeug mit dem Werkzeugabschnitt, welcher in die Verstellöffnung an der Lichtquellen-Baugruppe angreift, die Lichtquellen-Baugruppe entsprechend.

Bei einer konkreten Ausführungsform ist vorgesehen, dass das Verschiebewerkzeug mit einem Werkzeug-Lagerabschnitt, welcher einen kreisförmigen Querschnitt aufweist, in der Werkzeugöffnung, welche ebenfalls kreisförmig ausgebildet ist, drehbar gelagert, und wobei der Werkzeugabschnitt exzentrisch, d.h. außerhalb der Drehachse des Werkzeuges angeordnet ist.

Durch Drehen eines solchen "Exzenterwerkzeuges" wird die Drehbewegung des Werkzeuges in eine Verschiebebewegung der Lichtquellen-Baugruppe umgesetzt und ermöglich ein einfaches und genaues Verschieben.

Zur Umsetzung der Bewegung des Werkzeuges in eine Verschiebebewegung der Lichtquellen-Baugruppe ist beispielsweise vorgesehen, dass die Verstellöffnung ein Langloch ist, welches sich normal zu der Verschieberichtung erstreckt und in der Verschiebeebene der Lichtquellen-Baugruppe liegt.

Beispielsweise ist der Baugruppen-Träger ein Kühlkörper.

Üblicherweise ist vorgesehen, dass die eine oder die mehreren Lichtquellen LED-Lichtquellen sind, wobei jede LED-Lichtquelle zumindest eine, vorzugsweise genau eine Leuchtdiode umfasst, und wobei der Lichtquellen-Träger als LED-Print ausgebildet ist.

Zur Erzeugung von Lichtsegmente ist weiters vorgesehen, dass die Vorsatzoptik zwei oder mehrere voneinander getrennte Lichtaustrittsflächen aufweist, und wobei über jede Lichtaustrittsfläche Licht von zumindest einer LED-Lichtquelle abgestrahlt wird.

Konkret weist in diesem Fall die Vorsatzoptik zwei oder mehrere Lichtleitkörper, beispielsweise in Form von Lichttunneln oder total reflektierenden Lichtleitkörpern auf, mit jeweils einer Lichteintrittsfläche bzw. Lichteinkoppelfläche und jeweils einer Lichtanstrittsfläche bzw. Lichtauskoppelfläche. In jeden dieser Lichtleitkörper, wird Licht von zumindest einer LED-Lichtquellen eingekoppelt und über die Lichtauskoppelfläche als Lichtsegmente abgestrahlt. Jeder Lichtleitkörper, verfügt dabei über nur genau ihm zugeordnete Lichtquellen, sodass ganz bestimmte Lichtsegmente ausgeschaltet, gedimmt, oder überhaupt nur ganz bestimmte Lichtsegmente aktiviert werden können.

Dazu ist es günstig, wenn jede LED-Lichtquelle getrennt ansteuerbar und ein- bzw. ausschaltbar und/oder dimmbar ist, wobei vorzugsweise jede Leuchtdiode einer LED-Lichtquelle getrennt ansteuerbar und ein- bzw. ausschaltbar und/oder dimmbar ist.

Auf diese Weise kann das Lichtbild, wie oben angesprochen, segmentweise, d.h. pro Lichtaustrittsfläche ein- oder ausgeschaltet etc. werden.

Weiters ist vorgesehen, dass die Sekundäroptik eine Linse, insbesondere eine Projektionslinse ist. Entsprechend wird der Sekundäroptik-Träger auch als "Linsenhalter" bezeichnet.

Die Erfindung betrifft weiters eine Beleuchtungsvorrichtung für ein Kraftfahrzeug bzw. für einen Kraftfahrzeugscheinwerfer, welche zumindest oben beschriebenes Lichtmodul umfasst.

Vorzugsweise weist eine solche zwei oder mehr Lichtmodule auf, wobei zumindest eines, vorzugsweise alle als oben beschriebene Lichtmodule ausgebildet sind.

Grundsätzlich könnte vorgesehen sein, dass nur ein Lichtmodul oder bei n Modulen (n = ganzzahlig) (n - 1) Module entsprechend der Erfindung einstellbar sind. Vorzugsweise sind allerdings alle Lichtmodule entsprechend der Erfindung ausgebildet, sodass identische Lichtmodule verwendet werden können, Außerdem können dann die Einstellmöglichkeiten optimal ausgenutzt werden.

Insbesondere ist vorgesehen, dass die zwei oder mehr Lichtmodule gemeinsam zur Erzeugung einer Lichtverteilung eingerichtet sind.

Bei diesen Lichtverteilungen handelt es sich beispielsweise um Fernlicht, insbesondere blendfreies Fernlicht, Kurvenlicht, Schlechtwetterlicht, Autobahnlicht, Tagfahrlicht, usw; diese weisen beispielsweise einen segmentierten Aufbau auf, alle Lichtsegmente gemeinsam bilden die Lichtverteilung.

Die zwei oder mehr Lichtmodule sind bei einer konkreten Ausführungsform auf einem gemeinsamen Tragkörper angeordnet.

Zur Einstellung der Lichtbilder der Lichtmodule kann weiters noch vorgesehen sein, dass ein, zwei oder mehrere, vorzugsweise alle Lichtmodule in vertikaler Richtung verstellbar, beispielsweise jeweils in vertikaler Richtung verschiebbar oder jeweils um eine horizontale Achse an dem Tragkörper verschwenkbar gelagert sind.

Im Folgenden ist die Erfindung an Hand der Zeichnung näher erörtert. In dieser zeigt
Fig. 1 eine perspektivische Ansicht von schräg hinten einer Beleuchtungsvorrichtung mit drei Lichtmodulen,
Fig. 2 ein erfindungsgemäßes Lichtmodul in einer Explosionsdarstellung,
Fig. 3a die Bestandteile einer Lichtquellen-Baugruppe vor dem Zusammensetzen,
Fig. 3b die zusammengesetzte Lichtquellen-Baugruppe,
Fig. 4 ein zusammengesetztes erfindungsgemäßes Lichtmodul,
Fig. 5 einen Horizontalschnitt entlang der Linie A-A aus Figur 8 durch ein erfindungsgemäßes Lichtmodul im Bereich der Arretierschrauben,
Fig. 6 ein erfindungsgemäßes Lichtmodul in einer Ansicht von schräg hinten mit abgenommenem Baugruppen-Träger,
Fig. 7 ein erfindungsgemäßes Lichtmodul mit Baugruppen-Träger,
Fig. 8 das Lichtmodul in einer Rückansicht,
Fig. 9 ein Werkzeug zum Verstellen der Lichtquellen-Baugruppe, und
Fig. 10 eine grob schematische Darstellung von Lichtsegmenten, erzeugt mit einem erfindungsgemäßen Lichtmodul, und den Effekt des Verschiebens der Lichtquellen-Baugruppe.

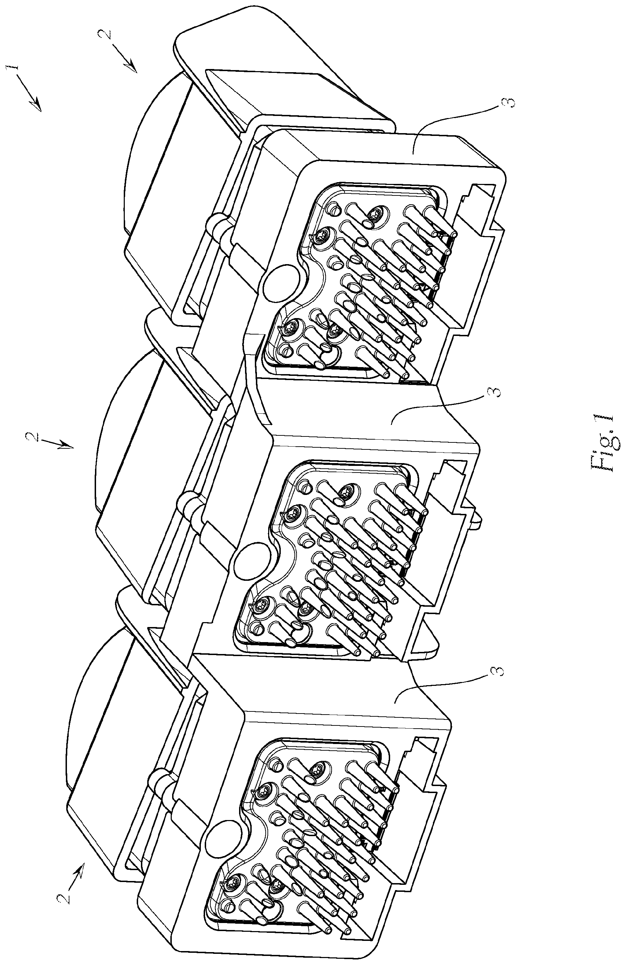

Figur 1 zeigt eine Beleuchtungsvorrichtung 1 für ein Kraftfahrzeug bzw. für einen Kraftfahrzeugscheiriwerfer mit drei erfindungsgemäßen Lichtmodulen 2, welche auf einem gemeinsamen Tragkörper 3 angeordnet sind und welcher zur Erzeugung einer gemeinsamen Lichtverteilung eingerichtet sind.

Bei dieser Lichtverteilung handelt es sich beispielsweise um Fernlicht, insbesondere blendfreies Fernlicht, Kurvenlicht, Schlechtwetterlicht, Autobahnlicht, Tagfahrlicht, usw; diese weisen beispielsweise einen segmentierten Aufbau auf, alle Lichtsegmente gemeinsam bilden die Lichtverteilung.

Die Lichtmodule können dabei auch in vertikaler Richtung, also auf und ab verstellbar, beispielsweise verschiebbar oder um eine horizontale Achse verschwenkbar ausgebildet sein, dies ist in den Figuren aber nicht näher dargestellt.

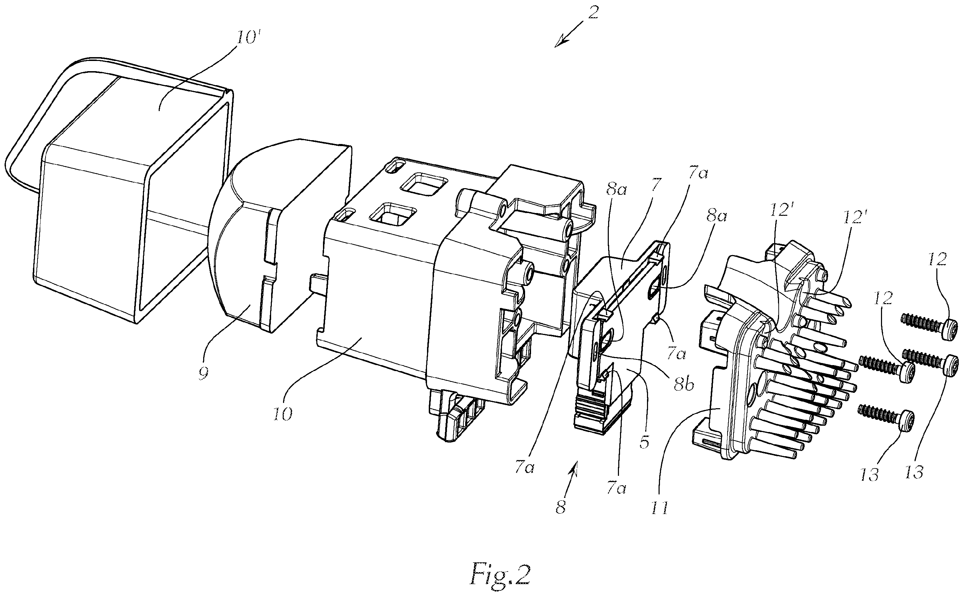

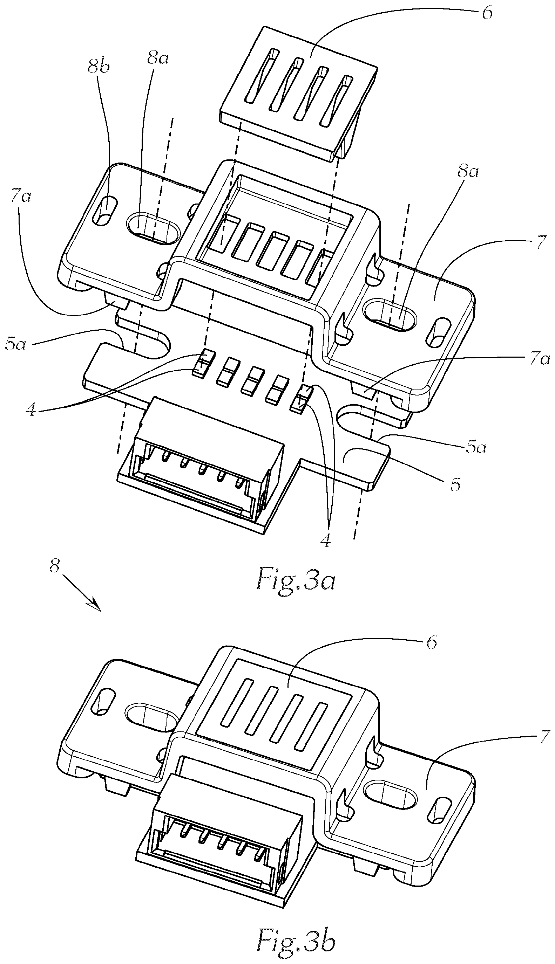

Figur 2 zeigt gemeinsam mit den Figuren 3a, 3b ein erfindungsgemäßes Lichtmodul 2, wie es in Figur 1 zum Einsatz kommt. Das Lichtmodul 2 umfasst dabei eine Anzahl von Lichtquellen 4, welche auf einem Lichtquellen-Träger 5 angeordnet sind, und welche Licht in eine vorgeschaltete Vorsatzoptik 6 einkoppeln. Die Vorsatzoptik 6 ist mittels eines Vorsatzoptik-Trägers 7 an dem Lichtquellen-Träger 5 befestigbar ist, sodass die Lichtquellen 4, der Lichtquellen-Träger 5, die Vorsatzoptik 6 und der Vorsatzoptik-Träger 7 eine Lichtquellen-Baugruppe 8 bilden.

Die Vorsatzoptik 6 weist fünf Lichtleitkörper auf, welche in den Vorsatzoptik-Träger 7 eingesetzt sind. In jeden dieser fünf Lichtleitkörper koppeln in diesem Beispiel jeweils zwei LED-Lichtquellen bestehend je aus einer Leuchtdiode Licht ein. Über die Lichtaustrittsflächen der Lichtleitkörper tritt dieses Licht aus den L,ichtleitkörpern aus und bildet jeweils ein Segment im Lichtbild

Es sind also fünf Gruppen von Lichtquellen vorgesehen, je eine Gruppe pro Lichtleitkörper, und wobei zumindest jede Gruppe getrennt von den anderen ansteuerbar, d.h. ein- und ausschaltbar, dimmbar etc. ist. Auf diese Weise kann das Lichtbild, wie oben angesprochen, segmentweise, d.h. pro Lichtleitkörper ein- oder ausgeschaltet etc. werden.

Der Vorsatzoptik-Trägers 7 ist an dem Lichtquellen-Träger 5 vorzugsweise lösbar befestigbar, beispielsweise sind die beiden Teile miteinander verrastbar oder verklipsbar, wie dies in den Figuren 3a und 3b dargestellt ist. Dabei werden Lichtquellen-Träger 5 und Vorsatzoptik-Träger 7 vorerst zueinander zentriert und zu der Lichtquellen-Baugruppe 8 mittels Rasthaken 7a verrastet.

Weiters umfasst das Lichtmodul 2 eine Sekundäroptik 9, insbesondere eine Linse, beispielsweise eine Projektionslinse, welche in Lichtaustrittsrichtung nach der Vorsatzoptik 6 angeordnet ist und mit einem Sekundäroptik-Träger (Linsen-Träger) 10 gehalten ist. Weiters dargestellt ist noch eine Linsen-Blende 10', welche den Linsen-Träger 10 teilweise abdeckt.

Außerdem ist ein Baugruppen-Träger 11 vorgesehen, in Bezug auf welchen die Lichtquellen-Baugruppe 8 befestigbar ist. Bei diesem Baugruppen-Träger 11 handelt es sich typischerweise um einen Kühlkörper 11.

Weiters zeigt Figur 3 noch Klemmschrauben 12 und Arretierschrauben 13, deren Funktion im Folgenden näher erläutert wird.

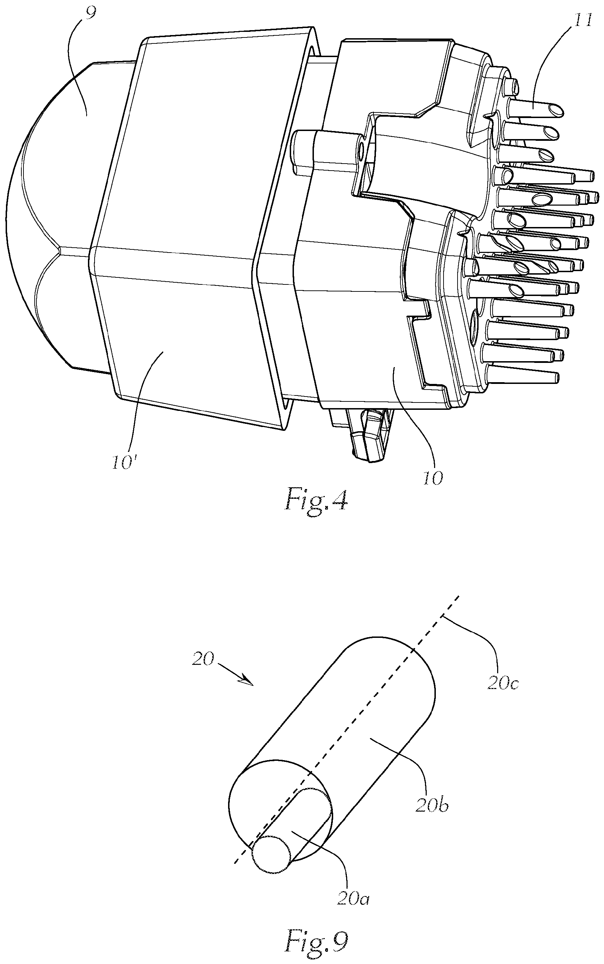

Figur 4 zeigt schließlich noch das Lichtmodul 2 in zusammengebautem Zustand.

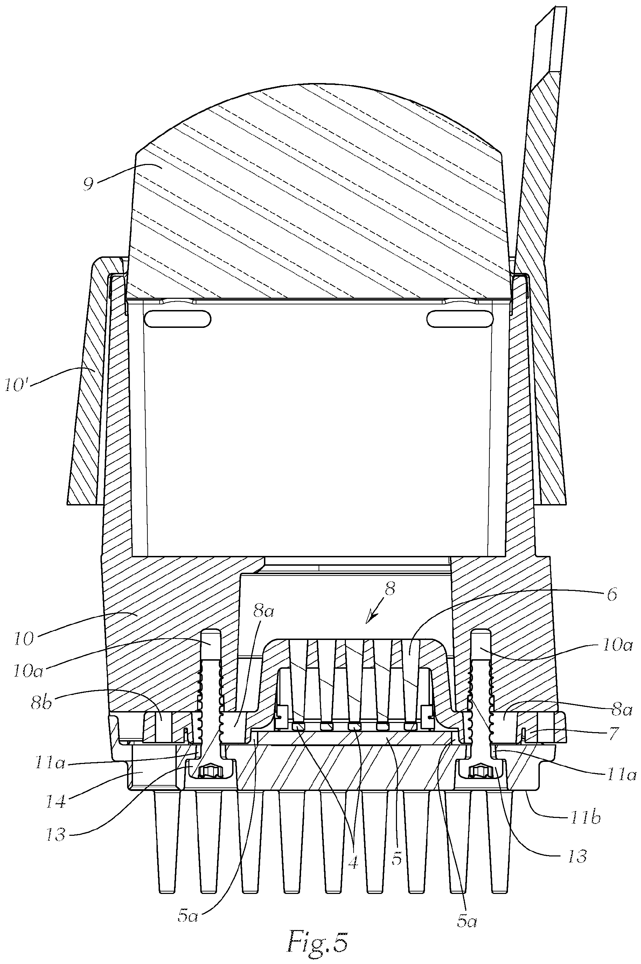

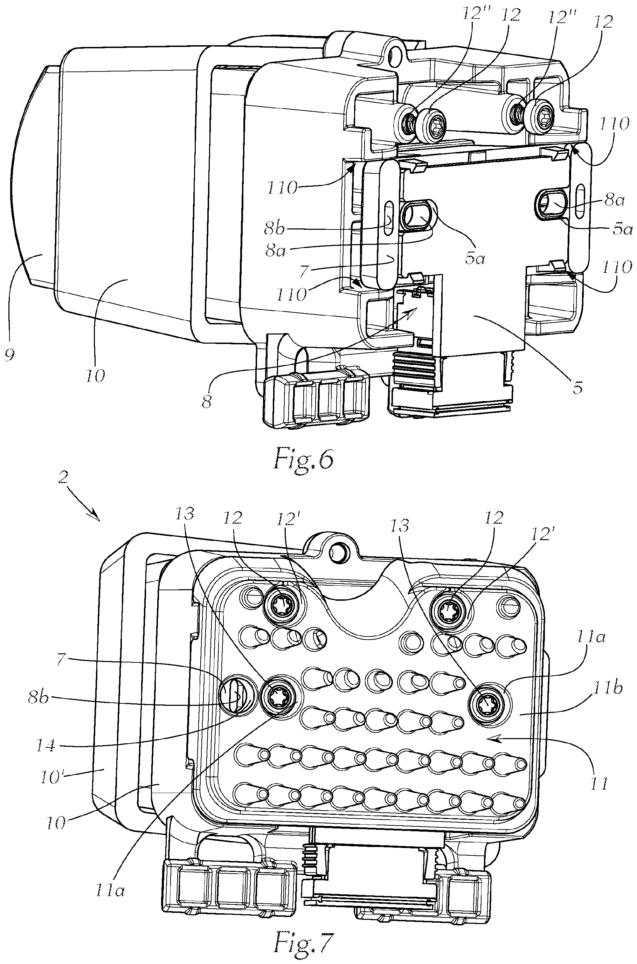

Betrachtet man nun die Figuren 5 - 7, so ist folgendes zu erkennen: Das Lichtmodul 2 weist Klemmittel in Form von zwei Klemmschrauben 12 auf, mittels dieser Klemmschrauben 12 kann der Kühlkörper 11 mit dem Linsen-Träger 10 verschraubt werden, wie dies in Figur 7 gezeigt ist. Dadurch wird die Baugruppe 8 zwischen Kühlkörper 11 und Linsen-Träger 10 eingeklemmt, insbesondere wird - wie dies in Figur 5 gut zu erkennen ist - dabei der Vorsatzoptik-Träger 7 zwischen diesen beiden Bauteilen geklemmt.

Wird nun diese Klemmung so weit gelöst, dass Kühlkörper 11 und Linsen-Träger 10 miteinander noch (gelockert) verbunden sind, so wird die dazwischen liegende Baugruppe 8 verschieblich, und zwar im Wesentlichen parallel zu dem Kühlkörper 11. Prinzipiell ist dabei ein beliebiges Verschieben (links - rechts, auf - ab) denkbar, auch Kombinationen dieser Verschiebemöglichkeiten, bei der gezeigten Ausführungsform ist ein horizontales Verschieben (links - rechts) realisiert.

Durch Verschieben der Baugruppe 8 kann die Lichtverteilung, die von dieser Lichtquellen-Baugruppe 8 erzeugt wird, entsprechend ausgerichtet werden, in der korrekten, gewünschten Position schließlich kann die Lichtquellen-Baugruppe 8 in Bezug auf den Baugruppen-Träger (kühlkörper) 11 fixiert werden.

Die Klemmschrauben 12 verbinden dabei den Baugruppen-Träger 11 und den Sekundäroptik-Träger 10 direkt, ohne dass von diesen Klemmschrauben 12 die Baugruppe 8 kontaktiert wird, wie dies in Figur 6 in Verbindung mit Figur 7 gut zu erkennen ist. Der Kühlkörper 11 weist dazu entsprechende Öffnungen 12' auf, in dem Linsen-Träger 10 sind korrespondierende Gewinde 12" vorgesehen.

Bei der konkreten Ausführungsform der Erfindung wie in den Figuren gezeigt ist vorgesehen, dass der Sekundäroptik-Träger 10 eine Führung 110 für die Lichtquellen-Baugruppe 8 bildet, in welcher diese Lichtquellen-Baugruppe 8 verschieblich, insbesondere seitlich, d.h. bezogen auf die Einbaulage des Lichtmodul 2 horizontal (links - rechts) verschieblich gelagert ist.

Wie schon unter Verweis auf Figur 4 beschrieben, ist weiters vorgesehen, dass Arretiermittel in Form von zwei Arretierschrauben 13 vorgesehen sind, mittels welcher die Lichtquellen-Baugruppe 8 in Bezug auf den Baugruppen-Träger 11 fixierbar ist.

Nach Einstellung der korrekten Position kann somit zusätzlich zu der Klemmung die Lichtquellen-Baugruppe 8 mit den Arretierschrauben 13 in Bezug auf den Baugruppen-Träger 11 fixiert werden, sodass auch im Betrieb des Fahrzeuges die Lichtquellen-Baugruppe zuverlässig positioniert ist.

Die Arretierschrauben 13 durchsetzen dabei die Rückseite 11b des Baugruppen-Trägers 11 durch eine jeweils zugeordnete Arretierschraubenöffnung 11a in dem Baugruppen-Träger 11. Weiters durchsetzen die Arretierschrauben 13 die Baugruppe 8 durch eine jeweils zugeordnete Baugruppen-Öffnung 8a, und sind schließlich in ein korrespondierendes Arretierschrauben-Gewinde 10a in dem Sekundäroptik-Träger 10 einschraubbar ist.

Die Baugruppen-Öffnungen 8a sind als Langlöcher ausgebildet, wobei sich diese in Einbaulage bei der gezeigten Ausführungsform in horizontaler Richtung, im Wesentlichen normal zur Lichtaustrittsrichtung erstrecken.

Vorzugsweise sind die Baugruppen-Öffnungen 8a an dem Vorsatzoptik-Träger 7 ausgebildet. Der Lichtquellen-Träger 5 weist entsprechende Ausnehmungen 5a auf, damit die Öffnungen 8a frei liegen.

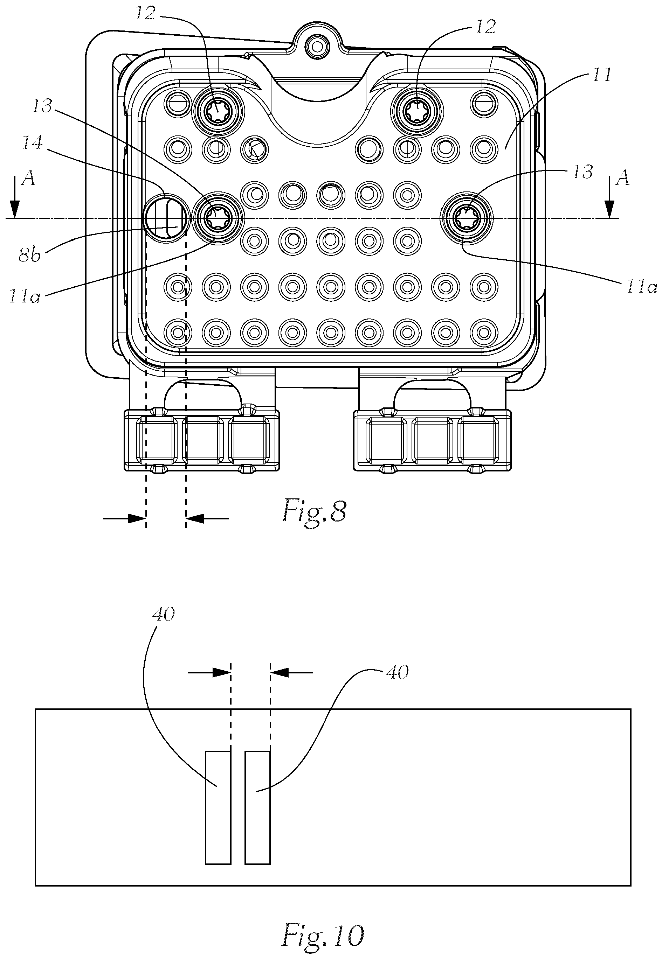

Betrachtet man abschließen die Figuren 8 - 10, so ist zu erkennen, dass für ein einfaches Einstellen der Lichtquellen-Baugruppe vorzugsweise der Baugruppen-Träger 11 eine Werkzeug-Öffnung 14 (siehe auch Figur 5 und 7) zum Einsetzen eines Verschiebewerkzeuges 20 (Figur 9) aufweist, mittels welchem die Lichtquellen-Baugruppe 8 verschiebbar ist.

Das Verschiebewerkzeug 20 ist mit einem Werkzeug-Lagerabschnitt 20b, welcher einen kreisförmigen Querschnitt aufweist, in der Werkzeugöffnung 14, welche ebenfalls kreisförmig ausgebildet ist, drehbar gelagert. Außerdem verfügt das Werkzeug über einen Werkzeugabschnitt 20a, welcher exzentrisch, d.h. außerhalb der Drehachse 20c des Werkzeuges 20 angeordnet ist.

Dieser Werkzeugabschnitt 20a greift in eine Verstellöffnung 8b (Figuren 5 - 8) in der Lichtquellen-Baugruppe 8 ein, welche Verstellöffnung 8b der Werkzeug-Öffnung 14 gegenüberliegend angeordnet ist, wobei die Verstellöffnung 8b wie gezeigt vorzugsweise an dem Vorsatzoptik-Träger 7 angeordnet ist.

Durch Bewegen des Werkzeuges 20 in der Werkzeugöffnung verschiebt das Werkzeug mit dem Werkzeugabschnitt 20a die Lichtquellen-Baugruppe 8 entsprechend. Konkret wird durch Drehen eines solchen "Exzenterwerkzeuges" 20 die Drehbewegung des Werkzeuges in eine Verschiebebewegung der Lichtquellen-Baugruppe 8 umgesetzt und ermöglich ein einfaches und genaues Verschieben der Baugruppe 8.

Zur Umsetzung der Bewegung des Werkzeuges in eine Verschiebebewegung der Lichtquellen-Baugruppe ist konkret vorgesehen, dass die Verstellöffnung 8b ein Langloch ist, welches sich normal zu der Verschieberichtung erstreckt und in der Verschiebeebene der Lichtquellen-Baugruppe 8 liegt.

Figur 10 zeigt dabei genau eines von fünf mit einem Lichtmodul 2 erzeugbaren Lichtsegmenten 40 und die beiden Extrempositionen der Lichtsegmente, die sich durch entsprechendes Verschieben wie oben beschrieben einstellen lassen.

## Patentansprüche

1. Lichtmodul (2) für einen Scheinwerfer, insbesondere einen Kraftfahrzeugscheinwerfer, wobei das Lichtmodul (2) umfasst:
- ) eine oder mehrere Lichtquellen (4), welche auf einem Lichtquellen-Träger (5) angeordnet ist/sind,
- ) zumindest eine Vorsatzoptik (6), welche zumindest eine Vorsatzoptik (6) mittels eines Vorsatzoptik-Trägers (7) an dem Lichtquellen-Träger (5) befestigbar ist, sodass Lichtquellen (4), Lichtquellen-Träger (5), zumindest eine Vorsatzoptik (6) und Vorsatzoptik-Träger (7) eine Lichtquellen-Baugruppe (8) bilden,
- ) eine Sekundäroptik (9), welche in Lichtaustrittsrichtung nach der zumindest einen Vorsatzoptik (6) angeordnet ist und mit einem Sekundäroptik-Träger (10) gehalten ist,
- ) und wobei weiters ein Baugruppen-Träger (11) vorgesehen ist, in Bezug auf welchen die Lichtquellen-Baugruppe (8) befestigbar ist,
- ) und wobei Klemmmittel vorgesehen sind, mittels welcher Klemmmittel die Lichtquellen-Baugruppe (8) zwischen dem Sekundäroptik-Träger (10) und dem Baugruppen-Träger (11) lösbar einklemmbar ist,
- ) und wobei im gelösten Zustand der Klemmmittel die Lichtquellen-Baugruppe (8) im Wesentlichen parallel zu dem Baugruppen-Träger (11) verschiebbar ist,
- ) und wobei die Klemmmittel zumindest eine Klemmschraube (12) umfassen, mittels welcher der Baugruppen-Träger (11) und der Sekundäroptik-Träger (10) direkt miteinander verbindbar sind, so dass die zumindest eine Klemmschraube (12) die Lichtquellen-Baugruppe (8) nicht durchsetzt,
- ) **dadurch gekennzeichnet, dass** Arretiermittel vorgesehen sind, mittels welcher Arretiermittel die Lichtquellen-Baugruppe (8) in Bezug auf den Baugruppen-Träger (11) fixierbar ist,
- ) wobei die Arretiermittel die Lichtquellen-Baugruppe (8) an dem Baugruppen-Träger (11) und dem Sekundäroptik-Träger (10) befestigen,
- ) und wobei die Arretiermittel zumindest eine Arretierschraube (13) umfassen, welche Arretierschraube (13) eine Rückseite (11b) des Baugruppen-Trägers (11) durch eine zugeordnete Arretierschraubenöffnung (11a) in dem Baugruppen-Träger (11) sowie eine Baugruppen-Öffnung (8a) der Lichtquellen-Baugruppe (8) durchsetzt und in ein korrespondierendes Arretierschrauben-Gewinde (10a) in dem Sekundäroptik-Träger (10) einschraubbar ist.

2. Lichtmodul nach Anspruch 1, **dadurch gekennzeichnet, dass** die Klemmmittel genau zwei Klemmschrauben (12) umfassen.

3. Lichtmodul nach Anspruch 1 oder 2, **dadurch gekennzeichnet, dass** der Sekundäroptik-Träger (10) eine Führung für die Lichtquellen-Baugruppe (8) bildet, in welcher diese Lichtquellen-Baugruppe (8) verschieblich, insbesondere seitlich, d.h. bezogen auf die Einbaulage des Lichtmoduls (2) horizontal verschieblich gelagert ist.

4. Lichtmodul nach einem der Ansprüche 1 bis 3, **dadurch gekennzeichnet, dass** die zumindest eine Baugruppen-Öffnung (8a) als Langloch ausgebildet ist, wobei in Einbaulage das Langloch sich vorzugsweise in horizontaler Richtung, im Wesentlichen normal zur Lichtaustrittsrichtung erstreckt.

5. Lichtmodul nach einem der Ansprüche 1 bis 4, **dadurch gekennzeichnet, dass** die Arretiermittel genau zwei Arretierschrauben (13) mit zugeordneten Öffnungen (8a, 11a) bzw. Gewinden (10a) umfassen.

6. Lichtmodul nach einem der Ansprüche 1 bis 5, **dadurch gekennzeichnet, dass** die zumindest eine Baugruppen-Öffnung (8a) an dem Vorsatzoptik-Träger (7) ausgebildet ist.

7. Lichtmodul nach einem der Ansprüche 1 bis 6, **dadurch gekennzeichnet, dass** der Vorsatzoptik-Trägers (7) an dem Lichtquellen-Träger (5) lösbar befestigbar, beispielsweise verrastbar oder verklipsbar ist.

8. Lichtmodul nach einem der Ansprüche 1 bis 7, **dadurch gekennzeichnet, dass** der Baugruppen-Träger (11) eine Werkzeug-Öffnung (14) zum Einsetzen eines Verschiebewerkzeuges (20), mittels welchem die Lichtquellen-Baugruppe (8) verschiebbar ist, aufweist, wobei vorzugsweise die Lichtquellen-Baugruppe (8) eine Verstellöffnung (8b) aufweist, welche der Werkzeugöffnung (14) gegenüberliegend angeordnet ist, wobei die Verstellöffnung (8b) vorzugsweise an dem Vorsatzoptik-Träger (7) angeordnet ist, und in welche Verstellöffnung (8b) das Verschiebewerkzeug (20) mit einem Werkzeugabschnitt (20a) eingreift.

9. Lichtmodul nach Anspruch 8, **dadurch gekennzeichnet, dass** das Verschiebewerkzeug (20) mit einem Werkzeug-Lagerabschnitt (20b), welcher einen kreisförmigen Querschnitt aufweist, in der Werkzeugöffnung (14), welche ebenfalls kreisförmig ausgebildet ist, drehbar gelagert, und wobei der Werkzeugabschnitt (20a) exzentrisch, d.h. außerhalb der Drehachse (20c) des Werkzeuges (20) angeordnet ist, und/oder **dadurch gekennzeichnet, dass** die Verstellöffnung (8b) ein Langloch ist, welches sich normal zu der Verschieberichtung erstreckt und in der Verschiebeebene der Lichtquellen-Baugruppe (8) liegt.

10. Lichtmodul nach einem der Ansprüche 1 bis 9, **dadurch gekennzeichnet dass** der Baugruppen-Träger (11) ein Kühlkörper ist.

11. Beleuchtungsvorrichtung (1) für ein Kraftfahrzeug bzw. für einen Kraftfahrzeugscheinwerfer, umfassend zumindest ein Lichtmodul nach einem der Ansprüche 1 bis 10, wobei vorzugsweise die Beleuchtungsvorrichtung zwei oder mehr Lichtmodule umfasst, wobei zumindest eines, vorzugsweise alle als Lichtmodul(e) nach einem der Ansprüche 1 bis 10 ausgebildet sind.

12. Beleuchtungsvorrichtung nach Anspruch 11, **dadurch gekennzeichnet, dass** die zwei oder mehr Lichtmodule (2) gemeinsam zur Erzeugung einer Lichtverteilung eingerichtet sind.

13. Beleuchtungsvorrichtung nach Anspruch 11 oder 12, **dadurch gekennzeichnet, dass** die zwei oder mehr Lichtmodule (2) auf einem gemeinsamen Tragkörper (3) angeordnet sind.

14. Beleuchtungsvorrichtung nach einem der Ansprüche 11 bis 13, **dadurch gekennzeichnet, dass** ein, zwei oder mehrere, vorzugsweise alle Lichtmodule (2) in vertikaler Richtung verstellbar, beispielsweise jeweils in vertikaler Richtung verschiebbar oder jeweils um eine horizontale Achse an dem Tragkörper (3) verschwenkbar gelagert sind.

15. Fahrzeugscheinwerfer mit zumindest einer Beleuchtungsvorrichtung nach einem der Ansprüche 11 bis 14.

## Claims

1. A light module (2) for a headlight, in particular a motor vehicle headlight, wherein the light module (2) comprises:
- ) one or more light sources (4), which is/ are arranged on a light source carrier (5),
- ) at least one auxiliary optical unit (6), wherein said at least one auxiliary optical unit (6) can be fastened on the light source carrier (5) by means of an auxiliary optical unit carrier (7) such that the light sources (4), the light source carrier (5), the at least one auxiliary optical unit (6), and the auxiliary optical unit carrier (7) form a light source assembly (8),
- ) a secondary optical unit (9), which is arranged behind the at least one auxiliary optical unit (6), in the light exit direction, and is held by a secondary optical unit carrier (10),
- ) and wherein, in addition, an assembly carrier (11) is provided, relative to which the light source assembly (8) can be fastened,
- ) and wherein clamping means are provided, by means of which the light source assembly (8) can be detachably clamped between the secondary optical unit carrier (10) and the assembly carrier (11),
- ) and wherein, in the detached state of the clamping means, the light source assembly (8) is displaceable substantially parallel to the assembly carrier (11),
- ) and wherein the clamping means comprise at least one clamping screw (12), by means of which the assembly carrier (11) and the secondary optical unit carrier (10) can be directly connected to one another such that the at least one clamping screw (12) does not extend through the light source assembly (8),
**characterized in that** locking means are provided, by means of which the light source assembly (8) can be fixed relative to the assembly carrier (11),
- ) wherein the locking means fasten the light source assembly (8) on the assembly carrier (11) and the secondary optical unit carrier (10),
- ) and wherein the locking means comprise at least one locking screw (13), wherein said locking screw (13) extends through a back side (11b) of the assembly carrier (11), through an assigned locking-screw opening (11a) in the assembly carrier (11), and through an assembly opening (8a) of the light source assembly (8), and can be screwed into a corresponding locking-screw thread (10a) in the secondary optical unit carrier (10).

2. The light module according to claim 1, **characterized in that** the clamping means comprise exactly two clamping screws (12).

3. The light module according to claim 1 or 2, **characterized in that** the secondary optical unit carrier (10) forms a guide for the light source assembly (8), in which this light source assembly (8) is mounted so as to be displaceable, in particular laterally, i.e., horizontally relative to the installation position of the light module (2).

4. The light module according to any one of claims 1 to 3, **characterized in that** the at least one assembly opening (8a) is designed as a slot, wherein, in the installation position, the slot preferably extends in the horizontal direction, substantially normally relative to the light exit direction.

5. The light module according to any one of claims 1 to 4, **characterized in that** the locking means comprise exactly two locking screws (13) having assigned openings (8a, 11a) or threads (10a).

6. The light module according to any one of claims 1 to 5, **characterized in that** the at least one assembly opening (8a) is formed on the auxiliary optical unit carrier (7).

7. The light module according to any one of claims 1 to 6, **characterized in that** the auxiliary optical unit carrier (7) can be detachably fastened on the light source carrier (7), for example being snapped into or clipped thereon.

8. The light module according to any one of claims 1 to 7, **characterized in that** the assembly carrier (11) has a tool opening (14) for the insertion of a displacement tool (20), by means of which the light source assembly (8) can be displaced, wherein preferably the light source assembly (8) has an adjustment opening (8b), which is disposed opposite the tool opening (14), wherein the adjustment opening (8b) is preferably disposed on the auxiliary optical unit carrier (7), and into which adjustment opening (8b) the displacement tool (20) engages via a tool section (20a).

9. The light module according to claim 8, **characterized in that** the displacement tool (20) having a tool mounting section (20b), which has a circular cross section, is rotatably mounted in the tool opening (14), which also has a circular configuration, and wherein the tool section (20a) is eccentrically disposed, i.e., outside of the axis of rotation (20c) of the tool (20) and/or **characterized in that** the adjustment opening (8b) is a slot, which extends normally relative to the displacement direction and lies in the displacement plane of the light source assembly (8).

10. The light module according to any one of claims 1 to 9, **characterized in that** the assembly carrier (11) is a heat sink.

11. A lighting device (1) for a motor vehicle or for a motor vehicle headlight, comprising at least one light module according to any one of claims 1 to 10, wherein preferably the lighting device comprises two or more light modules, wherein at least one, preferably all are designed as light module(s) according to any one of claims 1 to 10.

12. The lighting device according to claim 11, **characterized in that** the two or more light modules (2) in combination are set up to generate a light distribution.

13. The lighting device according to claim 11 or **12, characterized in that** the two or more light modules (2) are disposed on a common carrier body (3).

14. The lighting device according to any one of claims 11 to 13, **characterized in that** one, two, or more, preferably all light modules (2) can be adjusted in the vertical direction, e.g., being mounted on the carrier body (3) such that each one is displaceable in the vertical direction or each one is pivotable about a horizontal axis.

15. A vehicle headlight comprising at least one lighting device according to any one of claims 11 to 14.

## Revendications

1. - Module lumineux (2) pour un phare, en particulier un phare de véhicule automobile, le module lumineux (2) comprenant :
- ) une ou plusieurs sources lumineuses (4), laquelle/lesquelles est/sont disposée/disposées sur un support de sources lumineuses (5),
- ) au moins une optique additionnelle (6), laquelle au moins une optique additionnelle (6) est apte à être fixée sur le support de sources lumineuses (5) au moyen d'un support d'optiques additionnelles (7), de telle sorte que les sources lumineuses (4), le support de sources lumineuses (5), au moins une optique additionnelle (6) et le support d'optiques additionnelles (7) forment un ensemble source lumineuse (8),
- ) une optique secondaire (9), laquelle est disposée dans la direction de sortie de lumière après la au moins une optique additionnelle (6) et est maintenue par un support d'optique secondaire (10),
- ) et où de plus un support d'ensemble (11) est prévu, par rapport auquel l'ensemble source lumineuse (8) est apte à être fixé,
- ) et où des moyens de serrage sont prévus, au moyen desquels moyens de serrage l'ensemble source lumineuse (8) est apte à être serré de façon amovible entre le support d'optique secondaire (10) et le support d'ensemble (11),
- ) et où, dans l'état détaché des moyens de serrage, l'ensemble source lumineuse (8) est apte à être déplacé sensiblement parallèlement au support d'ensemble (11),
- ) et où les moyens de serrage comprennent au moins une vis de serrage (12), au moyen de laquelle le support d'ensemble (11) et le support d'optique secondaire (10) sont aptes à être reliés directement l'un à l'autre, de telle sorte que la au moins une vis de serrage (12) ne traverse pas l'ensemble source lumineuse (8),
- ) **caractérisé par le fait que**
des moyens d'arrêt sont prévus, au moyen desquels moyens d'arrêt l'ensemble source lumineuse (8) est apte à être fixé par rapport au support d'ensemble (11),
- ) où les moyens d'arrêt fixent l'ensemble source lumineuse (8) sur le support d'ensemble (11) et le support d'optique secondaire (10),
- ) et où les moyens d'arrêt comprennent au moins une vis d'arrêt (13), laquelle vis d'arrêt (13) traverse un côté arrière (11b) du support d'ensemble (11) par une ouverture de vis d'arrêt associée (lia) dans le support d'ensemble (11), ainsi qu'une ouverture d'ensemble (8a) de l'ensemble source lumineuse (8), et est apte être vissée dans un filetage de vis d'arrêt correspondant (10a) dans le support d'optique secondaire (10).

2. - Module lumineux selon la revendication 1, **caractérisé par le fait que** les moyens de serrage comprennent exactement deux vis de serrage (12).

3. - Module lumineux selon l'une des revendications 1 ou 2, **caractérisé par le fait que** le support d'optique secondaire (10) forme un guide pour l'ensemble source lumineuse (8), dans lequel cet ensemble source lumineuse (8) est monté déplaçable, en particulier latéralement, c'est-à-dire déplaçable horizontalement par rapport à la position de montage du module lumineux (2).

4. - Module lumineux selon l'une des revendications 1 à 3, **caractérisé par le fait que** la au moins une ouverture d'ensemble (8a) est réalisée sous la forme d'un trou oblong, où, en position de montage, le trou oblong s'étend sensiblement perpendiculairement à la direction de sortie de lumière, de préférence dans la direction horizontale.

5. - Module lumineux selon l'une des revendications 1 à 4, **caractérisé par le fait que** les moyens d'arrêt comprennent exactement deux vis d'arrêt (13) avec des ouvertures (8a, 11a) ou filetages (10a) associés.

6. - Module lumineux selon l'une des revendications 1 à 5, **caractérisé par le fait que** la au moins une ouverture d'ensemble (8a) est formée sur le support d'optiques additionnelles (7).

7. - Module lumineux selon l'une des revendications 1 à 6, **caractérisé par le fait que** le support d'optiques additionnelles (7) est apte à être fixé de façon amovible sur le support de sources lumineuses (5), par exemple apte à être encliqueté ou apte à être clipsé.

8. - Module lumineux selon l'une des revendications 1 à 7, **caractérisé par le fait que** le support d'ensemble (11) présente une ouverture pour outil (14) pour l'insertion d'un outil de déplacement (20), au moyen duquel l'ensemble source lumineuse (8) est déplaçable, où de préférence l'ensemble source lumineuse (8) présente une ouverture de réglage (8b), laquelle est disposée opposée à l'ouverture pour outil (14), où l'ouverture de réglage (8b) est disposée de préférence sur le support d'optiques additionnelles (7), et dans laquelle ouverture de réglage (8b) l'outil de déplacement (20) vient en prise avec une section d'outil (20a).

9. - Module lumineux selon la revendication 8, **caractérisé par le fait que** l'outil de déplacement (20) ayant une section de montage d'outil (20b), laquelle présente une section transversale circulaire, est monté à rotation dans l'ouverture pour outil (14), laquelle est réalisée également circulaire, et où la section d'outil (20a) est disposée excentriquement, c'est-à-dire à l'extérieur de l'axe de rotation (20c) de l'outil (20), et/ou **caractérisé par le fait que** l'ouverture de réglage (8b) est un trou oblong, lequel s'étend perpendiculairement à la direction de déplacement et se situe dans le plan de déplacement de l'ensemble source lumineuse (8).

10. - Module lumineux selon l'une des revendications 1 à 9, **caractérisé par le fait que** le support d'ensemble (11) est un dissipateur thermique.

11. - Dispositif d'éclairage (1) pour un véhicule automobile ou pour un phare de véhicule automobile, comprenant au moins un module lumineux selon l'une des revendications 1 à 10, où, de préférence, le dispositif d'éclairage comprend au moins deux modules lumineux, où au moins un, de préférence tous sont réalisés en tant que module(s) lumineux selon l'une des revendications 1 à 10.

12. - Dispositif d'éclairage selon la revendication 11, **caractérisé par le fait que** les au moins deux modules lumineux (2) sont configurés conjointement pour la génération d'une répartition de lumière.

13. - Dispositif d'éclairage selon l'une des revendications 11 ou 12, **caractérisé par le fait que** les au moins deux modules lumineux (2) sont disposés sur un corps de support commun (3).

14. - Dispositif d'éclairage selon l'une des revendications 11 à 13, **caractérisé par le fait qu'**un, deux ou plus, de préférence tous les modules lumineux (2) sont montés réglables dans la direction verticale, par exemple déplaçables chacun dans la direction verticale ou pivotables chacun sur le corps de support (3) autour d'un axe horizontal.

15. - Phare de véhicule automobile ayant au moins un dispositif d'éclairage selon l'une des revendications 11 à 14.
